# EUROPEAN PATENT APPLICATION

(11) **EP 2 816 270 A2**
(43) Date of publication of application: **24.12.2014**
(21) Application number: 14382236.9
(22) Date of filing: 18.06.2014
(51) Int. Cl.: F16K 31/54, F16K 31/04

(54) **Motorised solenoid valve**

(30) Priority: 21.06.2013 ES 201330787 U
(71) Applicant: Bitron Industrie Espana, S.A., 08930 Barcelona (ES)
(72) Inventor: ANTLER, MARKUS, 08930 BARCELONA (ES)
(74) Representative: Isern-Jara, Nuria

(57) **Abstract**

A motorised solenoid valve that comprises an outer housing having a plurality of passages for the circulation of a fluid connected to each other by a rotary stem disc located inside the outer housing that actuates by motorised means, said rotary stem disk including a number of cavities that interconnect at least two passages for the circulation of fluid through them, and wherein said cavities including sealing means. Said solenoid valve includes a cam mechanism connected to the motorised actuation means and the rotary stem disc to simultaneously perform a movement of rotation in either direction of rotation and an upward movement and/or downward movement of the rotary stem disc.

## Description

### OBJECT OF THE INVENTION

The object of the present invention relates to a motorised solenoid valve that incorporates significant innovations and advantages.

More specifically, the invention proposes the development of a new motorised solenoid valve that comprises an outer housing having a plurality of passages for the circulation of a fluid connected to each other by means of a rotary stem disc actuated by motorised means, said rotary stem disk including a number of cavities that interconnect at least two passages for the circulation of fluid through them, and said cavities including sealing means.

### BACKGROUND OF THE INVENTION

The use of motorised solenoid valves, such as 4/2-way that interconnects two hydraulic circuits that are part of a combustion engine, for example, in a motor vehicle, is well known in the state of the art. One type of these solenoid valves is that which is formed by an outer casing within which a rotary stem disc is provided with sealing means, such as seals, which allows different interconnections of two passages between each other, such that a fluid can move from one hydraulic circuit to another, depending on the position of the aforementioned rotary stem disc.

However, in practice or during the service life of the solenoid valve it has been found that there is excessive wear on the seals. This fact implies that the sealing function fails over time as it is not guaranteed due to the deterioration of these sealing rings, therefore the service life of the solenoid valve is reduced considerably.

### DESCRIPTION OF THE INVENTION

The invention herein has been developed with the aim of providing a solenoid valve that is considered a novelty within the field of application and resolves the aforementioned drawbacks, further providing other additional advantages that will be apparent from the description detailed hereinafter.

It is therefore an object of the present invention to provide a motorised solenoid valve that comprises an outer housing having a plurality of passages for the circulation of a fluid connected to each other by means of a stem located inside the outer housing that actuates by motorised means, said rotary stem disk including a number of cavities interconnecting at least two passages for the circulation of fluid through them, and wherein said cavities include sealing means. In particular, the invention is characterised in that a cam mechanism is provided that is connected to the motorised actuation means and the rotary stem disc to simultaneously perform a movement of rotation in either direction of rotation and an upward movement and/or downward movement of the rotary stem disc.

Thanks to these characteristics, the excessive wear of the sealing means is prevented because when the solenoid valve is operating, particularly as the rotary stem disc should change positions to modify the connections between passages, said rotary stem disc can perform an upward movement with respect to the inner and lower surface of the outer casing where the passages are, thereby preventing friction between the sealing means and said inner and bottom surface when the rotary stem disc performs a rotational movement.

In a particularly preferred embodiment of the invention, the cam mechanism comprises an intermediate lifter disc that can rotate relative its own central axis and coupled to the motorised actuation means, being arranged between the rotary stem disc and an upper lid that covers the upper part of the outer casing, the face of the intermediate lifter disk facing the upper lid having a series of protrusions in the form of ramps which are complementary with a series of protrusions arranged on the face of the upper lid which is directed towards the intermediate lifter disc, such that the intermediate lifter disc can transmit an upward movement and/or downward movement to the rotary stem disk, and wherein gripping means are provided to keep the intermediate lifter disc and the rotary stem disc integrally moving.

According to another aspect of the invention, the intermediate lifting disc is coupled to a rotary shaft that projects from the outer casing which can rotate when the motorised actuation means are actuated.

Additionally, the cam mechanism includes a number of elastic means associated with the rotary shaft and the intermediate lifter disc, which may comprise a helicoidal spring.

Preferably, the aforementioned gripping means may comprise a number of tabs located on the intermediate lifter disc and arranged circumferentially opposite each other connected with a number of substantially circumferential protrusions which project from the perimeter of an upper face of the rotary stem disc.

In one embodiment, the motorised actuation means are located inside an additional housing, which facilitates the construction process of the solenoid valve assembly.

The sealing means consist of sealing rings arranged around the contour of each of the cavities, which are housed in a number of grooved portions made along the periphery of the contour of the respective cavities which ensure the sealing rings are correctly secured and positioned.

To ensure the solenoid valve operates optimally, the actuation means may include means for detecting the limit comprising, in a preferred embodiment, a permanent magnet connected to a Hall sensor which is connected to a printed circuit board plate.

To effect movement of the rotating parts that are inside the outer housing, a gear connected to the motorised actuation means is integrally coupled at the end of the rotary shaft.

Preferably, the actuation means comprise an electric motor which includes a gear system which transmits the motion to the gear secured to the rotary shaft.

Alternatively, the means for detecting the movement limit have a number of brush-type contacts, for example, that are associated with the abovementioned rotary shaft, said contacts being able to slide on a series of resistive tracks provided on a printed circuit board plate.

In a preferred embodiment, the outer housing comprises four passages arranged on the underside associated with two cavities in a rotary stem disc.

Other characteristics and advantages of the motorised solenoid valve, object of the invention herein, will become apparent from the description of a preferred, although not exclusive embodiment, which is illustrated by way of non-limiting example in the drawings appended, in which:

### BRIEF DESCRIPTION OF THE DRAWINGS

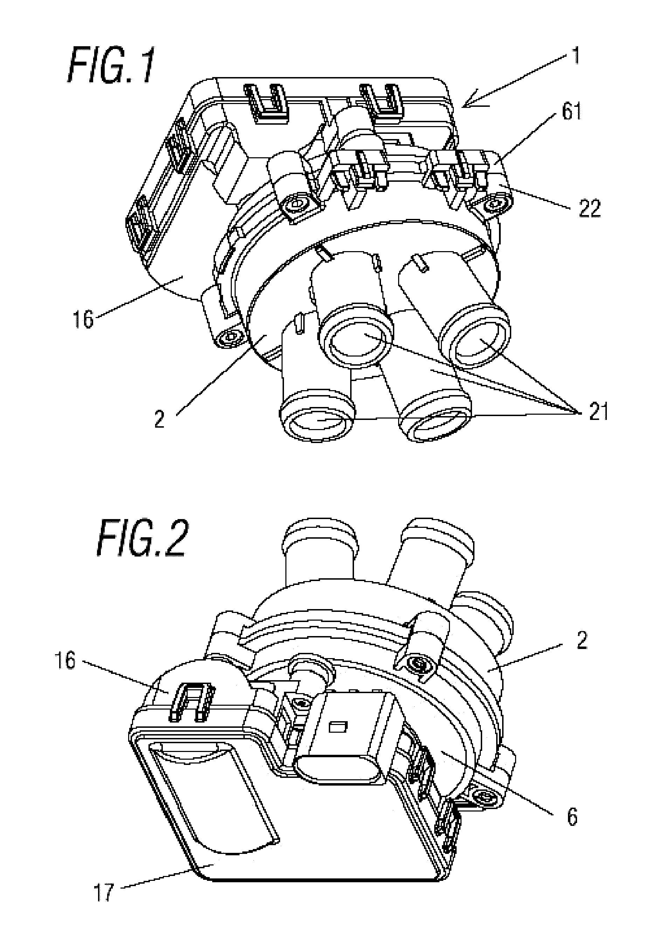

Figure 1.- Upper perspective view of a motorised solenoid valve according to the invention herein;
Figure 2.- Lower perspective view of a motorised solenoid valve according to the invention herein;

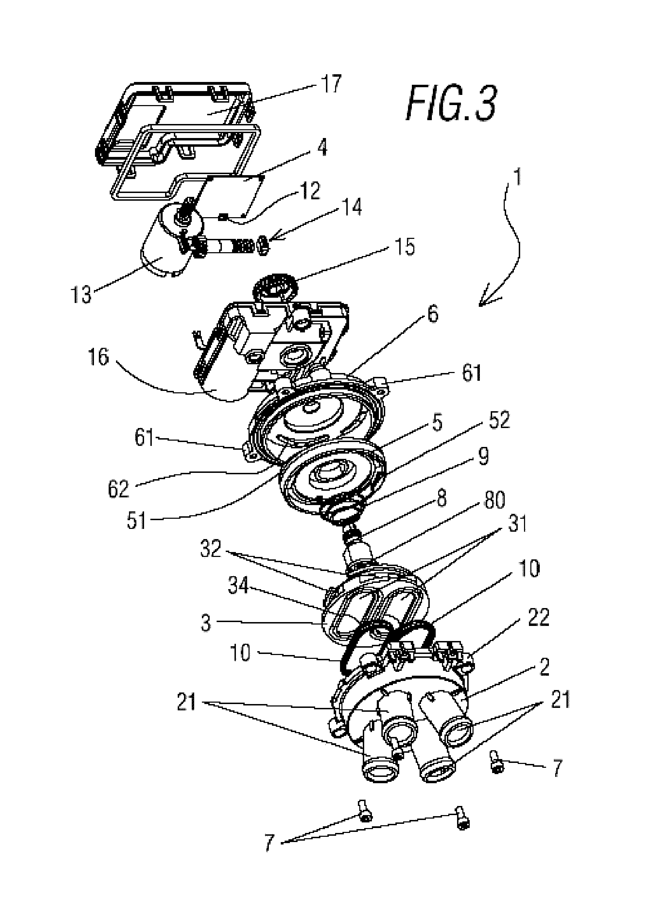

Figure 3.- Exploded perspective view of the motorised solenoid valve shown in the previous figures;
Figure 4.- Sectional view of the motorised solenoid valve; and
Figure 5.- Sectional view of the motorised solenoid valve.

### DESCRIPTION OF A PREFERRED EMBODIMENT

In view of the mentioned figures and according to the adopted numbering, an example of a preferred embodiment of the invention can be seen therein, which comprises the parts and elements indicated and described in detail below.

Therefore, as shown in the attached figures, the motorised solenoid valve, generally indicated by the reference (1) comprises an outer housing (2) being substantially cup-shaped and having four ports (21) which protrude from the lower face thereof that are suitable for the circulation of a fluid, each consisting of the passages (21) in cylindrical tubular extensions which exhibit a slight broadening at the extreme end thereof to ensure the coupling with the corresponding conduits (not shown) of the hydraulic circuit associated with the solenoid valve (1). Such passages (21) are linked by means of a rotary stem disc (3) located inside the outer casing that acts by motorised actuation means, thereby connecting the fluid with two hydraulic circuits, such as for example, the engine cooling system of a vehicle with the heating system inside the vehicle.

This rotary stem disc (3) has a pair of cavities which interconnect at least two passages for the circulation of fluid through them and wherein such cavities have sealing means.

This solenoid valve (1) has a cam mechanism (described in greater detail below) that is connected to the motorised actuation means and the rotary stem disc (3), so as to simultaneously perform a movement of rotation in either direction of rotation and an upward movement and/or downward movement of the rotary stem disc (3) when the interconnection change between the passages (21) must be carried out based on a number of orders received and processed by a printed circuit board plate (4) to manage the orders for directing the passage of fluid inside the solenoid (1).

The cam mechanism comprises an intermediate lifter disc (5) that can rotate round its own central axis and coupled to the motorised actuation means (described below), being arranged between the rotary stem disc (3) and a top lid (6) which covers the top part of the outer casing (2). The upper lid (6) and the outer casing (2) are secured by means of a plurality of screws (7) that pass through a number of holes present in extensions (22, 61) that project laterally and outwardly in the outer casing (2) and the upper lid (6), respectively.

The surface of the intermediate lifter disc (5) which faces the top lid (6) has a number of protrusions (51) in the form of ramps which are complementary to a number of protrusions (62) arranged on the face of the top cover (6) which is directed towards the intermediate lifter disc (5), such that the intermediate lifter disk (5) can transmit an upward movement and/or downward movement of the rotary stem disc (3). Additionally, gripping means are provided to keep the intermediate lifter disc and the rotary stem disc moving integrally, which consist of a number of tabs (52) located in the intermediate lifter disc (5) and arranged circumferentially opposite each other connected with a number of substantially circumferential protrusions (32) which project from the perimeter of an upper face of the rotary stem disc (3).

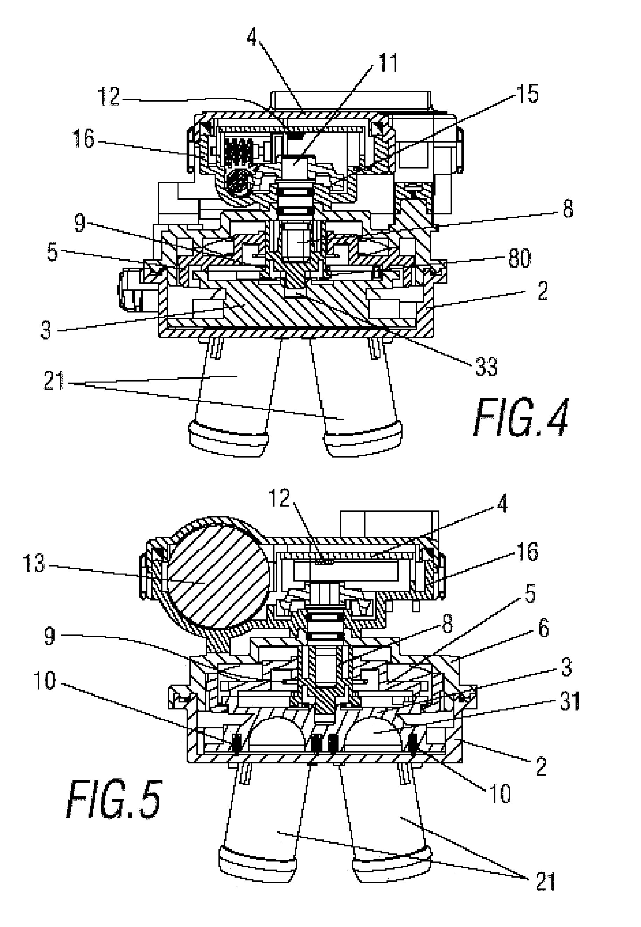

As can be seen, the intermediate lifter disc (5) is coupled to a rotary shaft (8) that projects from the outer casing (2) which can rotate when the motorised actuation means are actuated in an operating condition. The bottom of the rotary shaft (8) has a widened section (80) that can be coupled in a hole (33) arranged in the central part of the rotary stem disc (3), the widened section (80) and the opening acting as an engaging means, as shown in Figures 4 and 5.

Furthermore, the cam mechanism includes a helicoidal spring (9) connected to the aforementioned rotary shaft (8) and to the intermediate lifter disc (5).

Referring now to the sealing means, they consist of a number of sealing rings (10) arranged around the contour of each of the cavities (31), in particular they are housed in corresponding grooved portions (34) formed along the periphery of the contour of each of the cavities (31).

Advantageously, the actuation means include means for detecting the movement limit effected by the rotating disc stem (3) and/or the intermediate lifter disc (5).

As seen in greater detail in Figures 4 and 5, the means for detecting the movement limit consist of a permanent magnet (11) that is connected to a Hall sensor (12) which is connected to the printed circuit board plate (4) and the rotation movement of the rotary axis.

In an alternative embodiment not shown, detecting the limit can be carried out by controlling the consumption of the electric motor such that when said electric motor exceeds a previously established consumption value, it will shut down immediately.

Making particular reference to the actuation means, the latter comprise an electric motor (13) that includes a gear system, generally indicated by the reference (14) which transmits motion to a gear (15) which is integrally secured at the top end of the rotary shaft (8). Many of the components forming part of the actuation means are located inside an additional housing (16) which is coupled to the upper lid (6) and which also includes a protective lid (17).

In an alternative embodiment not shown, the means for detecting the movement limit may have a series of brush-type contacts associated with the rotary shaft which can slide on a series of resistive tracks provided on a printed circuit board plate, such that depending on the contact relationship between brushes and resistive tracks, each operation position of the solenoid valve can be detected.

In yet another alternative, detecting the limit can be carried out by detecting the consumption of the DC electric motor (13), such that if it is detected that the electric motor (13) exceeds a predetermined power consumption value or by a mechanical stop, said electric motor (13) stops and then inverts the direction of the rotation axis (8).

The operation of the above-described solenoid valve (1), the operation of which is performed when the interconnection between passages (21) is to be modified, is explained below:

When triggered, the electric motor (13) first starts a vertical lifting movement of the rotary stem disc (3) with respect to the bottom surface of the outer casing (2) by means of the intermediate lifter disc (5). When the rotary stem disc (3) is lifted together with the intermediate lifter disc (5), said rotary stem disc (3) engages with the rotary shaft (8) through the gear (15) actuated by the gear system (14). Once engaged, a rotation of 90° occurs (until the rotary stem disk (3) stops) and then a downward movement occurs due to direct sliding contact between the protrusions (51) serving as ramps with the protrusions (62), disengaging the rotary stem disc (3), such that when the crests of the protrusions (51) and (62) are in contact, this causes the compression of the sealing rings (10) with the lower surface of the outer casing (2) such that the desired sealing is achieved.

The details, shapes and dimensions and other accessory elements as well as the materials used in the manufacture of the solenoid valve of the invention may be conveniently replaced by others which are technically equivalent and do not depart from the scope defined by the claims provided hereinafter.

## Claims

1. A motorised solenoid valve (1) that comprises an outer housing having a plurality of passages for the circulation of a fluid connected to each other by a rotary stem disc located inside the outer housing (2) that actuates by motorised actuation means, said rotary stem disc (3) including a number of cavities interconnecting at least two passages for the circulation of the fluid through them, and wherein said cavities include sealing means, **characterised in that** a cam mechanism connected to the motorised actuation means and the rotary stem disc to simultaneously perform a movement of rotation in either direction of rotation and an upward movement and/or downward movement of the rotary stem disc (3) is provided.

2. The motorised solenoid valve (1) according to claim 1, **characterised in that** the cam mechanism comprises an intermediate lifter disc that can rotate relative its own central axis and coupled to the motorised actuation means, being arranged between the rotary stem disc (3) and an upper lid that covers the upper part of the outer casing (2), the face of the intermediate lifter disk facing the upper lid having a series of protrusions in the form of ramps which are complementary to a series of protrusions arranged on the face of the upper lid which is oriented towards the intermediate lifter disc (5), such that the intermediate lifter disc (5) can transmit an upward movement and/or downward movement to the rotary stem disk (3), and wherein gripping means are provided to keep the intermediate lifter disc (3) and the rotary stem disc integrally moving.

3. The motorised solenoid valve (1) according to claim 1, **characterised in that** the intermediate lifter disc is coupled to a rotary shaft (8) that projects from the outer casing which can rotate when the motorised actuation means are actuated.

4. The motorised solenoid valve (1) according to claims 2 and 3, **characterised in that** the cam mechanism includes elastic means connected to the rotary shaft and the intermediate lifter disc.

5. The motorised solenoid valve (1) according to claim 4, **characterised in that** the elastic means consist of a helicoidal spring.

6. The motorised solenoid valve (1) according to claim 2, **characterised in that** the gripping means comprise a number of tabs located on the intermediate lifter disc (5) and arranged circumferentially opposite each other connected with a number of substantially circumferential protrusions which project from the perimeter of an upper face of the rotary stem disc (3).

7. The motorised solenoid valve (1) according to claim 1, **characterised in that** the motorised actuation means are located inside an additional housing (16).

8. The motorised solenoid valve (1) according to claim 1, **characterised in that** the sealing means consist of sealing rings (10) arranged around the contour of each of the cavities (31).

9. The motorised solenoid valve (1) according to claim 8, **characterised in that** the sealing rings are housed in corresponding grooved portions (34) formed along the periphery of the contour of each of the cavities (31).

10. The motorised solenoid valve (1) according to claim 1, **characterised in that** the actuating means includes means for detecting the movement limit effected by the rotary stem disc (3) and/or the intermediate lifter disc (5).

11. The motorised solenoid valve (1) according to claim 3 and 10, **characterised in that** the means for detecting the movement limit consist of a permanent magnet that is connected to a Hall sensor (12) that is connected to the printed circuit board plate (4) and the rotation movement of the rotary axis.

12. The motorised solenoid valve (1) according to claim 3, **characterised in that** at the top end of the rotary shaft (8) is integrally coupled to a gear connected to the motorised actuation means.

13. The motorised solenoid valve (1) according to claim 12, **characterised in that** the actuation means comprise an electric motor which includes a gear system which transmits the motion to the gear secured to the rotary shaft.

14. The motorised solenoid valve (1) according to claim 10, **characterised in that** the means for detecting the movement limit have a number of brush-type contacts associated with the sliding rotary shaft on a series of resistive tracks provided on a printed circuit board plate.

15. The motorised solenoid valve (1) according to claim 1, **characterised in that** the outer casing (2) comprises four passages (21) arranged on the underside associated with two cavities arranged in rotary stem disk.
